# EUROPÄISCHE PATENTANMELDUNG

(11) **EP 4 753 143 A1**
(43) Veröffentlichungstag der Anmeldung: **03.06.2026**
(21) Anmeldenummer: 25208732.5
(22) Anmeldetag: 15.10.2025
(51) Int. Cl.: H02S 20/23, F24S 25/634

(54) **BEFESTIGUNGSELEMENT**

(30) Priorität: 29.11.2024 DE 102024135355
(71) Anmelder: fischerwerke GmbH & Co. KG, 72178 Waldachtal (DE)
(72) Erfinder: Schaffner, Maximilian, 72184 Eutingen (DE); Wohriska, Mathias, 72275 Alpirsbach (DE)
(74) Vertreter: Suchy, Ulrich Johannes

(57) **Zusammenfassung**

Die Erfindung betrifft ein Befestigungselement (1) zum Befestigen eines Solarmoduls (23) an einer Unterkonstruktion (25) an einem Untergrund. Das Befestigungselement (1) weist eine Schweißmutter (12) mit vier Erhebungen (17) auf. Zur Befestigung des Solarmoduls (23) an der Unterkonstruktion (25) wird eine Klemmschraube (21) in die Schweißmutter (12) eingeschraubt, wodurch sich die Erhebungen (17) in einen Rahmen (24) des Solarmoduls (23) einpressen, wodurch eine Eloxalschicht am Rahmen (24) zerstört wird und das Solarmodul (23) entsprechend geerdet ist.

## Beschreibung

Die Erfindung betrifft ein Befestigungselement mit den Merkmalen des Oberbegriffs des Anspruchs 1. Ein vergleichbarer Befestiger, welcher für die Befestigung von gerahmten Solarmodulen geeignet ist, ist aus der europäischen Patentschrift EP 3 851 686 B1 bekannt. Der Befestiger umfasst einen Kunststoffkäfig, in welchem eine Mutter aus Metall spielpassungsartig gelagert ist. Der Kunststoffkäfig weist eine U-förmige Öffnung auf, mit welcher der Befestiger auf den Rahmen eines Solarmoduls geschoben werden kann. Mittels einer Schraube, die in die Mutter im Befestiger geschraubt werden kann, ist der Befestiger endfest an dem Rahmen des Solarmoduls festlegbar. Der Befestiger dient dazu, das gerahmte Solarmodul an einem Untergrund festzulegen. Nachteilig an dem Befestiger ist, dass eine ausreichende elektrische Kontaktierung, also eine Erdung zwischen dem Befestiger, dem Solarmodul und dem Untergrund, nur bedingt gewährleistet werden kann. Eine ausreichende elektrische Kontaktierung ist jedoch für derartige Solarmodule essenziell, um im Falle von elektromagnetischen Interferenzen die fehlerfreie Funktion ohne eine Effizienzverminderung der Anlage zu gewährleisten, bzw. um eine Verletzung durch eventuelle Spannungsüberschläge auf einen Benutzer zu unterbinden.

Aufgabe der Erfindung ist, ein Befestigungselement für gerahmte Solarmodule vorzuschlagen, welches eine zuverlässige und einfache elektrische Kontaktierung bietet. Diese Aufgabe wird erfindungsgemäß durch die Merkmale des Anspruchs 1 gelöst. Die Erfindung schlägt ein Befestigungselement zur Befestigung an einem Rahmen eines Solarmoduls (im Folgenden lediglich "Modul" genannt) vor. Die Rahmen derartiger Module, die zumeist aus Aluminium gefertigt sind, sind an einer Rückseite, respektive an den Rändern der jeweiligen Module umlaufend befestigt und dienen dazu, das Modul an einem Untergrund, insbesondere einer Unterkonstruktion, zu befestigen. Derartige gerahmte Module sind weit verbreitet. Eine elektrische Kontaktierung zwischen solchen Modulen und dem jeweiligen Rahmen selbst ist gewährleistet. Problematisch ist jedoch die elektrische Kontaktierung zwischen dem Rahmen und dem zu befestigenden Untergrund selbst. Die Rahmen sind zumeist mit einer Eloxalschicht versehen, welche die Rahmen vor Korrosion schützen. Die Eloxalschicht bildet jedoch einen elektrischen Isolator, welche für eine zuverlässige elektrische Kontaktierung zumindest punktuell durchstoßen bzw. gebrochen werden muss, um das darunter liegende Aluminium des Rahmens zu erreichen. Dieser Aufgabe widmet sich die vorliegende Erfindung.

Das erfindungsgemäße Befestigungselement weist einen Befestigungselementkörper auf, der im Wesentlichen die Form einer Klemme aufweist. Der Befestigungselementkörper ist insbesondere einstückig und aus einem Kunststoff gefertigt, der durch Zugabe von Zusatzstoffen elektrisch leitfähig sein könnte. Eine Fertigung des Befestigungselementkörpers aus Metall, beispielsweise einem Blech, ist möglich. Kunststoff bietet den Vorteil einer einfachen und kostengünstigen Herstellbarkeit, beispielsweise durch "Spritzgießen". Besonders bewährt hat sich der Einsatz von Polyamid 6 (PA6) insbesondere in Verbindung mit einem Glasfaseranteil von insbesondere 15%. Hierdurch ist eine mechanische Belastbarkeit in Verbindung mit einem guten Schutz vor Witterung des Befestigungselementkörpers gewährleistet.

Der Befestigungselementkörper weist eine klemmenartige Gestalt auf und ist seitlich auf den Rahmen eines Moduls aufsteck- bzw. aufschiebbar. Der Befestigungselementkörper weist einen Aufnahmeraum und einem dem Aufnahmeraum gegenüberliegenden Klemmsteg auf, wobei zwischen dem Aufnahmeraum und dem Klemmsteg eine im Wesentlichen U-förmige Öffnung zur insbesondere klemmenden Aufnahme des Rahmens ausgebildet ist. Die Klemmengestalt des Befestigungselementkörpers rührt im Wesentlichen von der U-förmigen Öffnung her. Die Breite der U-förmigen Öffnung ist derart gestaltet, dass das Befestigungselement insbesondere leicht klemmend auf den Rahmen aufgeschoben werden kann. Die Breite korrespondiert somit insbesondere mit der Materialdicke des Rahmens. Eine leichte Klemmung sorgt dafür, dass das Befestigungselement am Rahmen vorfixierbar ist, somit von selbst in Position bleibt und nicht von einem Benutzer gehalten werden muss. Insbesondere ist der Klemmsteg hierfür zumindest leicht elastisch federnd in Richtung des Aufnahmeraums ausgebildet.

Der Aufnahmeraum ist bevorzugt quaderformähnlich ausgebildet und dient zur Aufnahme einer Befestigungsmutter, die in dem Aufnahmeraum angeordnet ist. Die Befestigungsmutter ist aus Metall gefertigt und weist eine Basisfläche und einer der Basisfläche gegenüberliegende Klemmfläche auf. Insbesondere sind Basisfläche und Klemmfläche parallel zueinander orientiert. Bevorzugt ist die Klemmfläche aus einer im Wesentlichen ebenen Grundfläche gebildet. Die Klemmfläche weist in Richtung des Klemmstegs und dient dazu, wenn das Befestigungselement auf einen Rahmen eines Moduls aufgesteckt ist, den Rahmen zwischen der Klemmfläche und dem Klemmsteg einzuklemmen, um somit das Befestigungselement endfest am Rahmen festzulegen. Die Klemmfläche und die Basisfläche sind durch mindestens eine Seitenfläche, insbesondere durch vier Seitenflächen, miteinander verbunden. Die Form der Befestigungsmutter korrespondiert insbesondere mit der Form des Aufnahmeraums. Insbesondere ist die Befestigungsmutter spielpassungsartig in dem Aufnahmeraum in Richtung des Klemmstegs zumindest geringfügig verschieblich.

Um das Befestigungselement endfest am Rahmen festzulegen, ist im Klemmsteg eine Klemmstegöffnung angeordnet, in welche ein Befestiger, insbesondere eine Klemmschraube, in Richtung des Aufnahmeraums eingebracht bzw. eingeschraubt werden kann. Die Befestigungsmutter weist ein zu dem Befestiger korrespondierendes Innengewinde auf, in welches der Befestiger eingebracht, also insbesondere die Klemmschraube eingeschraubt werden kann. Hierdurch ist die Befestigungsmutter in Richtung des Klemmstegs kraftbeaufschlagbar und somit das Befestigungselement am Rahmen endfest festlegbar. Anders formuliert wird durch Einschrauben der Klemmschraube in das Innengewinde der Befestigungsmutter die Befestigungsmutter in Richtung des Klemmstegs gezogen. Insbesondere sind das Innengewinde der Befestigungsmutter und die Klemmstegöffnung zumindest annähernd deckungsgleich. Insbesondere weist der Aufnahmeraum an einer dem Klemmsteg abgewandten Seite eine Durchtrittsöffnung auf, die insbesondere ebenfalls deckungsgleich mit der Klemmstegöffnung und dem Innengewinde der Befestigungsmutter ist. Die Durchtrittsöffnung dient zum Durchtritt des Befestigers, insbesondere der Klemmschraube. Die Rahmen der Module weisen zumeist bereits vorgefertigte Bohrungen auf, an welchen das Befestigungselement festlegbar ist. Anders formuliert wird bevorzugt das Befestigungselement an einer solchen Bohrung vorfixiert. Anschließend wird die Klemmschraube durch die Öffnung im Klemmsteg durch die Bohrung im Rahmen in das Innengewinde der Befestigungsmutter eingeschraubt und festgezogen, wodurch das Befestigungselement endfest am Rahmen festgelegt ist.

Kennzeichnend für die Erfindung ist, dass die Klemmfläche wenigstens eine Erhebung zur elektrischen Kontaktierung des Rahmens des Moduls aufweist. Die Erhebung dient dazu, eine Eloxalschicht am Rahmen aufzubrechen bzw. zu durchdringen, um einen elektrischen Kontakt mit dem Aluminium herzustellen. Hierdurch wird eine Erdung zwischen der Befestigungsmutter, der Klemmschraube und dem Rahmen hergestellt. Die Erhebung ragt von der Klemmfläche in Richtung des Klemmstegs hervor. Die Erhebung ist in Gestalt und Wirkweise vergleichbar mit einem Eindringkörper für Härteprüfungen. Die Erhebung kann folglich beispielhaft kugelförmig, pyramidenförmig, kegelförmig, kegelstumpfförmig oder dreieckförmig gestaltet sein. Die Nennung ist nur beispielhaft und nicht abschließend. Die Erhebung kann auch als Pin oder Dorn ausgebildet sein. Besonders sei darauf hingewiesen, dass die Erhebung keine symmetrische Gestalt aufweisen muss. Sie kann folglich auch asymmetrisch sein.

Voraussetzung ist lediglich, dass sie in der Lage ist, die isolierende Eloxalschicht zumindest punktuell zu durchbrechen und hierbei zumindest geringfügig in das Material des Rahmens, also insbesondere das Aluminium, einzudringen. Durch die Erhebung wird eine zuverlässige und einfache Erdung erreicht. Es braucht keine zusätzliche Erdung, da die Erdung bereits durch die Festlegung des Befestigungselements am Rahmen realisiert wird.

**In** einer vorteilhaften Ausgestaltung der Erfindung weist die Klemmfläche eine Mehrkantform, insbesondere eine Vierkantform auf, wobei die Erhebung in einer Ecke der Mehrkantform angeordnet ist. Besonders bevorzugt weist die Klemmfläche mehrere, insbesondere identisch hohe, Erhebungen auf, wobei die Erhebungen insbesondere jeweils in einer Ecke angeordnet sind. Besonders bevorzugt sind bei einer Vierkantform vier Erhebungen, die jeweils in einer der vier Ecken angeordnet sind. Diese Anordnung sorgt für ausreichend elektrischen Kontakt zwischen der Befestigungsmutter und dem Rahmen, da der Rahmen folglich an vier Stellen elektrisch kontaktiert wird. Zudem sorgt diese symmetrische Anordnung der Erhebungen dafür, dass es nicht zu einem Verkippen der Befestigungsmutter in dem Befestigungselementkörper kommt, wenn die Befestigungsmutter durch die Klemmschraube gegen den Rahmen des Moduls verspannt und folglich die Erhebungen zumindest geringfügig in den Rahmen eingepresst werden

Besonders bevorzugt ist als Klemmschraube eine Schweißmutter, insbesondere eine Vierkantschweißmutter aus Edelstahl, insbesondere aus A4-70-Stahl, wie sie bevorzugt im Automobilbereich verwendet wird. Die bevorzugte Vierkantschweißmutter weist vier gleichmäßige Überstände, die erfindungsgemäßen Erhebungen, auf. Bei sonst üblicher Verwendung dienen die Erhebungen der Schweißmutter dazu, die Schweißmutter mit einem Untergrund zu verschweißen. Hierfür werden die Überstände mit dem Untergrund verschmolzen, wodurch die Schweißmutter und der Untergrund stoffschlüssig verbunden werden. In der vorliegenden Erfindung werden die Überstände, also die Erhebungen, dafür genutzt, einen elektrischen Kontakt zu dem Rahmen herzustellen. In einer Draufsicht auf die Überstände der Schweißmutter weisen diese insbesondere ein näherungsweise dreieckförmiges Plateau auf, sind also nicht zwangsläufig spitz oder scharfkantig. Dies ist jedoch auch nicht notwendig, um einen ausreichendend elektrischen Kontakt herzustellen. Ein Vorteil in der Verwendung einer Schweißmutter ist, dass diese einer Norm unterliegt und in großen Stückzahlen verfügbar ist.

In einer weiteren bevorzugten Ausgestaltung der Erfindung weist der Befestigungselementkörper eine seitliche Öffnung zum Einbringen der Befestigungsmutter in den Aufnahmeraum auf. Unter "seitlich" ist insbesondere eine Richtung zu verstehen, die um 90° bezüglich einer Einbringrichtung der Klemmschraube in die Befestigungsmutter versetzt ist. Die Befestigungsmutter kann somit im Befestigungselementkörper vormontiert werden. Durch die seitliche Öffnung ist die Befestigungsmutter aus dem Befestigungselementkörper entfernbar. Somit können verschiedene Muttern, abhängig von dem Einsatzzweck, in den Befestigungselementkörper eingebracht werden. Insbesondere sorgen Federmittel dafür, dass eine in den Befestigungselementkörper eingebrachte Befestigungsmutter ortsfest bleibt und nicht aus der Öffnung herausfallen kann. Die Federmittel können dafür sorgen, dass die Befestigungsmutter in Richtung des Klemmstegs elastisch kraftbeaufschlagt wird. Die Federmittel sorgen zudem dafür, dass die Position der Befestigungsmutter im Befestigungselementkörper definiert ist, wodurch das Innengewinde der Mutter und die Klemmstegöffnung im Klemmsteg zumindest annähernd deckungsgleich gehalten sind, wodurch ein einfaches Einschrauben der Klemmschraube ermöglicht wird.

Durch eine insbesondere spielpassungsartige Anordnung der Befestigungselementmutter im Aufnahmeraum ist in einer weiteren bevorzugten Ausgestaltung die Befestigungselementmutter im Aufnahmeraum gegen Verdrehung gesichert. Somit wird ein Mitdrehen der Mutter beim Einschrauben der Klemmschraube vermieden. Anders formuliert ist die Mutter im Aufnahmeraum insbesondere im Wesentlichen nur in und entgegen der Einschraubrichtung der Klemmschraube beweglich.

**In** der U-förmigen Öffnung ist bevorzugt ein elastisches Federelement zur Klemmung des Rahmens des Solarmoduls angeordnet. Hierdurch wird die Vorfixierung des Befestigungselements am Rahmen des Moduls erleichtert. Das Federelement ist insbesondere einstückig mit dem Befestigungselementkörper und ist beispielsweise als Federarm ausgebildet.

Um eine Festlegung des Befestigungselements und somit des zu befestigenden Moduls an einer Unterkonstruktion zu ermöglichen, ist in einer weiteren bevorzugten Ausgestaltung der Erfindung auf einer dem Aufnahmeraum abgewandten Oberseite des Klemmstegs ein Kragen zur formschlüssigen Verbindung mit besagter Unterkonstruktion ausgebildet. Bei der Unterkonstruktion handelt es sich insbesondere um ein Montageschienensystem mit Adapterelementen. Insbesondere weisen die Adapterelemente mit dem Kragen derart korrespondierende Öffnungen auf, dass das Befestigungselement und somit die Module nur in bestimmten, durch den Formschluss vorgegebene, vorgesehenen Positionen verbaut werden können. Insbesondere sind die vorbestimmten Positionen zwei zueinander um 180° versetzte Positionen. Somit wird auf einfache Art und Weise vermieden, dass es zu einer falschen Montage kommt. Insbesondere ist eine Höhe des Kragens derart an die zu befestigende Unterkonstruktion, respektive das Adapterelement, angepasst, dass es zu keiner unmittelbaren Klemmung zwischen dem Befestigungselement und der Unterkonstruktion kommt. Somit kann es sich bei der Befestigung zwischen dem Befestigungselement und der Unterkonstruktion um eine sogenannte Festpunkt- oder Lospunktbefestigung handeln, wobei die Lospunktbefestigung einen Längenausgleich zwischen dem zu befestigenden Modul und der Unterkonstruktion ermöglicht. Ein solcher Längenausgleich ist zur Kompensierung von thermischen Ausdehnungen des Moduls notwendig.

Bevorzugt weist der Kragen auf einer Oberseite eine Zahnstruktur auf, die insbesondere mit einer Zahnstruktur, die auf einer Unterseite eines Kopfes der Klemmschraube ausgebildet ist, korrespondiert. Treten die beiden Zahnstrukturen bei der Montage des Befestigungselements an dem Rahmen in Kontakt, bekommt der Monteur eine ratschenartige haptische Rückmeldung, welche signalisiert, dass der Schraubenkopf mit dem Kragen in Kontakt getreten ist. Durch die Zahnstrukturen kann zudem ein bestimmungsgemäß aufzubringendes Anziehmoment der Schraube bestimmt werden. Insbesondere sind die Zahnstrukturen derart aufeinander abgestimmt, dass, sobald die ratschenartige haptische Rückmeldung ausbleibt, das erforderliche Anziehdrehmoment erreicht ist. In dieser Situation hat die Zahnstruktur der Klemmschraube die Zahnstruktur des Kragens nahezu vollständig abgeschert.

Zudem wird ein System aus einem Solarmodul und einem oder mehreren erfindungsgemäßen Befestigungselementen vorgeschlagen, wobei die Befestigungselemente jeweils an den Rahmen der Module befestigt sind und den Rahmen mit einem Untergrund, insbesondere mit einer am Untergrund festgelegten Unterkonstruktion verbinden, wodurch die Module an der Unterkonstruktion gehalten sind.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden.

Die Erfindung wird nachfolgend anhand eines Ausführungsbeispiels erklärt.

### Es zeigen:

- Figur 1: ein erfindungsgemäßes Befestigungselement in einer Seitenansicht,
- Figur 2: den erfindungsgemäßen Befestiger der Figur 1 in einer perspektivischen Darstellung;
- Figur 3: eine Befestigungsmutter des erfindungsgemäßen Befestigers in einer perspektivischen Darstellung, welche der Einbaulage in dem Befestiger der Figur 2 entspricht;
- Figur 4: ein System aus einem Solarmodul, dem erfindungsgemäßen Befestiger der Figuren 1 und 2 und einer Unterkonstruktion in einer Seitenansicht; und
- Figur 5: das System aus Figur 4 in einer perspektivischen Darstellung.

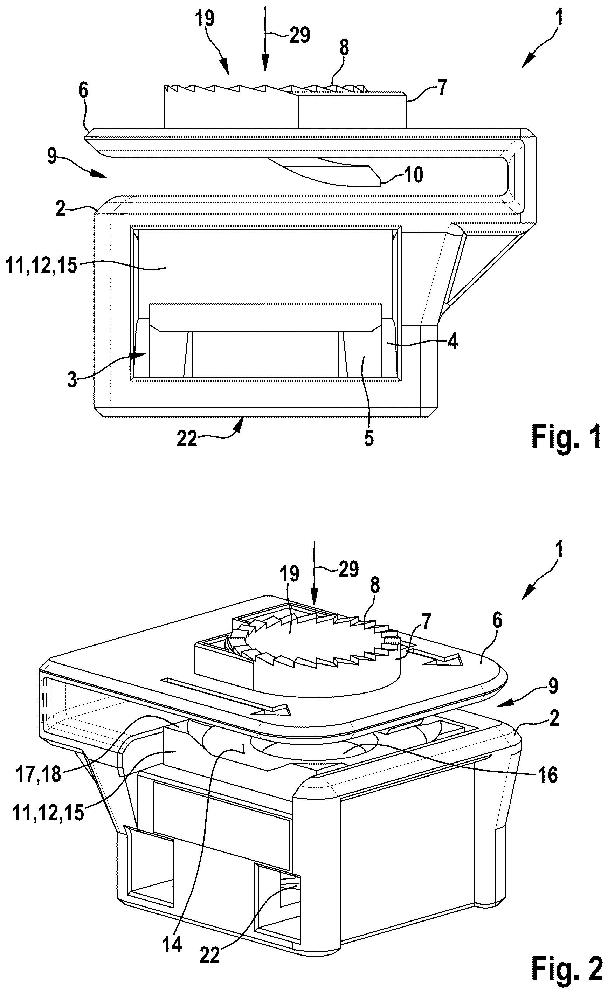

**In** Figur 1 ist ein erfindungsgemäßes Befestigungselement 1 in einer Seitenansicht dargestellt. Figur 2 zeigt das Befestigungselement 1 in einer perspektivischen Darstellung. Generell sind in den einzelnen Abbildungen aus Gründen der Übersichtlichkeit nicht alle Bezugszeichen enthalten. Das erfindungsgemäße Befestigungselement 1 weist die Form einer Klemme auf und umfasst einen Befestigungselementkörper 2, der einstückig aus einem Kunststoff spritzgegossen ist. Bei dem Kunststoff handelt es sich um PA6 mit einem Glasfaseranteil von 15%. Der Befestigungselementkörper 2 umfasst einen kubischen Aufnahmeraum 4, welcher durch eine seitliche Öffnung 3 im Befestigungselementkörper 2 zugänglich ist. In dem Aufnahmeraum 4 sind zwei Federmittel 5 angeordnet, die in Richtung eines Klemmstegs 6 orientiert sind. Die Federmittel 5 sind einstückig mit dem Befestigungselementkörper 2 und als Federarme ausgebildet. Der Klemmsteg 6 erstreckt sich im Wesentlichen parallel zu dem Aufnahmeraum 4. Zwischen dem Klemmsteg 6 und dem Aufnahmeraum 4 ist eine U-förmige Öffnung 9 zur Aufnahme eines Rahmens 24 eines Solarmoduls 23 ausgebildet. Der Klemmsteg 6 ist federelastisch ausgebildet, wodurch das Befestigungselement 1 an dem Rahmen 24 durch Klemmung vorfixierbar ist. Eine Klemmwirkung zum Vorfixieren wird zudem durch ein elastisches Federelement 10 verstärkt, welches in Richtung des Aufnahmeraums 4 orientiert ist. Das Federelement 10 ist einstückig mit dem Befestigungselementkörper 2 und als Federarm ausgebildet. Wird das Befestigungselement 1 auf den Rahmen 24 gesteckt, wird das elastische Federelement 10 in Richtung des Klemmstegs 6 gedrückt und so die Klemmwirkung zusätzlich verstärkt. Der Rahmen 24 ist aus Aluminium gefertigt und meist mit einem Eloxal beschichtet, um Korrosion vorzubeugen.

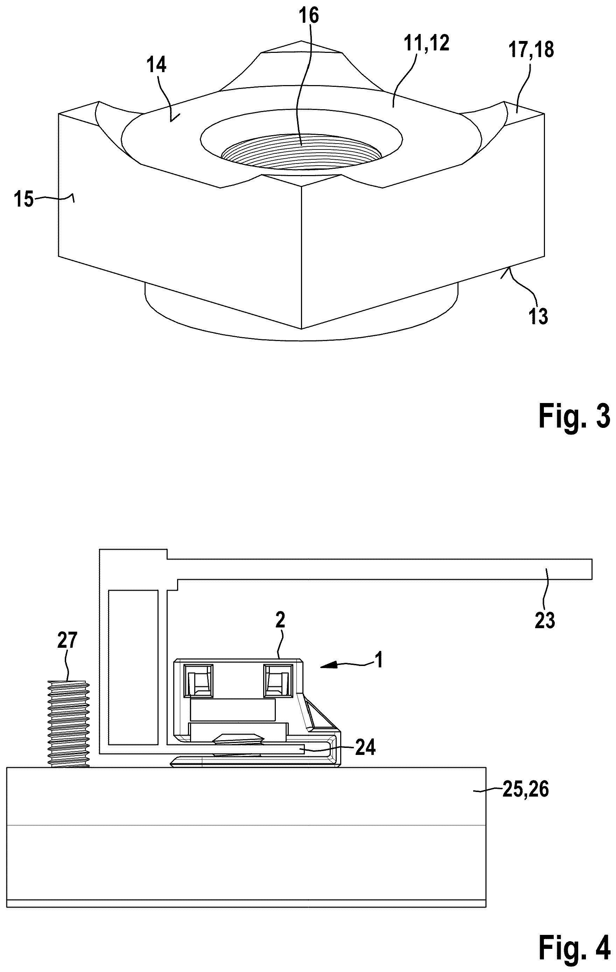

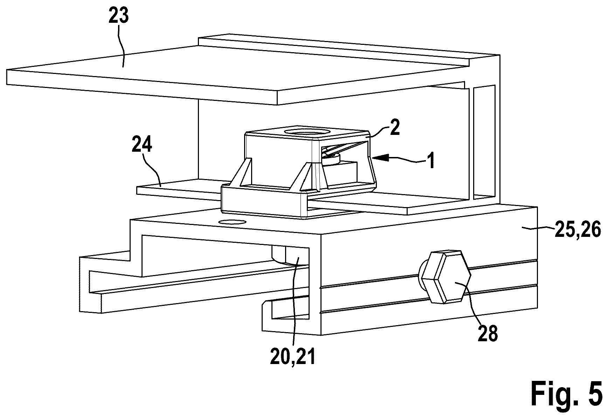

Auf dem Klemmsteg 6 ist ein Kragen 7 angeordnet, welcher von dem Klemmsteg 6 absteht. Der Kragen 7 dient dazu, den Befestigungselementkörper 2 und das im Befestigungselementkörper 2 befestigte Solarmodul 23 mit einem Untergrund, insbesondere einer Unterkonstruktion 25, welches ein oder mehrere Adapterelemente 26 umfasst, zu verbinden. Ein entsprechendes System aus einem Befestigungselement 1, einem Solarmodul 23 und einer Unterkonstruktion 25 ist in den Figuren 4 und 5 dargestellt und wird später noch im Detail beschrieben. Eine Form des Kragens 7 ist hierbei derart auf eine Öffnung (nicht dargestellt) im Adapterelement 26 abgestimmt, dass das Befestigungselement 1 und somit das Solarmodul 23 nur in vordefinierten Ausrichtungen, insbesondere zwei Ausrichtungen, die zueinander um 180° versetzt sind, montiert werden kann. Somit wird eine fehlerhafte Montage unterbunden. Auf dem Kragen 7 ist eine Zahnstruktur 8 ausgebildet, welche mit einer Zahnstruktur eines Befestigers, insbesondere einer Zahnstruktur an einem Unterkopf (beides nicht dargestellt) einer Klemmschraube 21, korrespondiert. Die Klemmschraube 21 dient dazu, den Befestiger 20 an dem Adapterelement 26 festzulegen. Treten der Unterkopf der Klemmschraube 21 und der Kragen 7 in Kontakt, bekommt der Benutzer eine haptische ratschenartige Rückmeldung. Bleibt bei einem weiteren Anziehen der Klemmschraube 21 die haptische Rückmeldung aus, ist ein vorgesehenes Nenndrehmoment erreicht. In dieser Situation ist die Zahnstruktur 8 von der Zahnstruktur 8 der Klemmschraube 21 abgeschert worden. Eine Höhe des Kragens 7 ist so an die Öffnung im Adapterelement 26 angepasst, dass der Kragen 7 zumindest geringfügig übersteht. Dies sorgt dafür, dass das Befestigungselement 1 durch die Klemmschraube 21 nicht an dem Adapterelement 26 festgeklemmt wird.

Zum Festklemmen des Befestigungselementkörpers 2 an dem Rahmen 24 des Solarmoduls 23 dient eine Befestigungsmutter 11, die eine Schweißmutter 12 ist. Diese ist spielpassungsartig in dem Aufnahmeraum 4 des Befestigungselementkörpers 2 angeordnet und ist im Aufnahmeraum 4 in Richtung des Klemmstegs 6 beweglich. Die Schweißmutter 12 ist im Detail in Figur 3 dargestellt. Sie umfasst eine quadratische Basisfläche 13 sowie einer der Basisfläche 13 gegenüberliegende quadratische Klemmfläche 14. Die Klemmfläche 14 und die Basisfläche 13 sind durch vier Seitenflächen 15 verbunden. Die Schweißmutter 12 besteht aus einem Edelstahl. Zudem umfasst die Schweißmutter 12 eine Öffnung mit einem Innengewinde 16. Die Schweißmutter 12 weist in den Ecken der quadratischen Klemmfläche 14 jeweils eine Erhebung 17 auf. Jede der Erhebungen 17 mündet in einem dreieckförmigen Plateau 18. Die Schweißmutter 12 ist in den Figuren 1 und 2 durch die seitliche Öffnung 3 in den Aufnahmeraum 4 eingebracht. Die Federmittel 5 drücken hierbei gegen die Basisfläche 13 und kraftbeaufschlagen somit die Schweißmutter 12 in Richtung des Klemmstegs 6, wodurch die Schweißmutter 12 vor Herausfallen gesichert ist. Wie in Figur 2 ersichtlich ist, sind die Erhebungen 17 in Richtung des Klemmstegs 6 orientiert.

Um ein Solarmodul 23 an einem Adapterelement 26 einer Unterkonstruktion 25 mittels des Befestigungselements 1 festzulegen, wird das Befestigungselement 1 zunächst auf den Rahmen 24 des Solarmoduls 23 aufgesteckt. Der Rahmen 24 umfasst hierzu eine vordefinierte Bohrung (nicht dargestellt), an welcher das Befestigungselement 1 auszurichten ist. Anschließend wird eine Klemmschraube 21 in einer Einbringrichtung 29 durch eine Klemmstegöffnung 19 im Klemmsteg 6 durch die vordefinierte Bohrung im Rahmen 24 hindurch in das Innengewinde 16 der Schweißmutter 12 eingedreht. Hierdurch wird durch kontinuierliches Eindrehen der Klemmschraube 21 die Schweißmutter 12 in Richtung des Klemmstegs 6 und somit gegen den Rahmen 24 des Solarmoduls 23 gezogen. Hierbei graben sich die vier Erhebungen 17 zumindest teilweise in das Aluminium des Rahmens 24 ein, wodurch das Eloxal an den vier Stellen, an denen sich die Erhebungen 17 in den Rahmen 24 drücken, zerstört wird. Durch die Zerstörung des Eloxals, welches ein elektrischer Isolator ist, wird an diesen Stellen eine elektrische Leitfähigkeit zwischen dem Adapterelement 26 und dem Rahmen 24 hergestellt. Somit ist eine Erdung des Solarmoduls 23 zum Untergrund, an welchem die Unterkonstruktion 25 befestigt ist, hergestellt. Der Befestigungselementkörper 2 weist an einer Unterseite eine Durchtrittsöffnung 22 für die Klemmschraube 21 auf. Somit kann bei der Montage des Befestigungselements 1 an dem Rahmen 24 eine eventuell zu lange Klemmschraube 21 durch den Befestigungselementkörper 2 hindurchgeschraubt werden.

Die Figuren 4 und 5 zeigen ein System aus einem Solarmodul 23, dem Befestiger 20 und einer Unterkonstruktion 25 mit einem Adapterelement 26. Der Kragen 7 des Befestigungselementkörpers 2 ist in eine korrespondierende Öffnung im Adapterelement 26 eingebracht (nicht dargestellt). Die Klemmschraube 21 fixiert das Befestigungselement 1 und das am Befestigungselement 1 angeordnete Solarmodul 23 an dem Adapterelement 26. Das Adapterelement 26 kann anschließend in ein Gegenelement der Unterkonstruktion 25, insbesondere ein Horizontalprofil (nicht dargestellt), eingehängt werden. Durch einen Höhenversteller 28 ist es möglich, eine Höhe des Gegenelements zum Adapterelement 26 und somit eine Höhe des Solarmoduls 23 zum Untergrund einzustellen. Eine Madenschraube 27 dient dazu, das Adapterelement 26 bezüglich des Gegenelements, nachdem eine Höhe des Solarmoduls 23 eingestellt ist, zu verspannen. Mit dem Einschrauben der Madenschraube 27 ist die Montage des Solarmoduls 23 am Untergrund abgeschlossen.

### Bezugszeichenliste

### Befestigungselement

- 1: Befestigungselement
- 2: Befestigungselementkörper
- 3: seitliche Öffnung
- 4: Aufnahmeraum
- 5: Federmittel
- 6: Klemmsteg
- 7: Kragen
- 8: Zahnstruktur
- 9: U-förmige Öffnung
- 10: elastisches Federelement
- 11: Befestigungsmutter
- 12: Schweißmutter
- 13: Basisfläche
- 14: Klemmfläche
- 15: Seitenfläche
- 16: Innengewinde
- 17: Erhebung
- 18: Plateau
- 19: Klemmstegöffnung
- 20: Befestiger
- 21: Klemmschraube
- 22: Durchtrittsöffnung
- 23: Solarmodul
- 24: Rahmen
- 25: Unterkonstruktion
- 26: Adapterelement
- 27: Madenschraube
- 28: Höhenversteller
- 29: Einbringrichtung

## Patentansprüche

1. Befestigungselement (1) zur Befestigung an einem Rahmen (24) eines Solarmoduls (23), umfassend einen Befestigungselementkörper (2), wobei der Befestigungselementkörper (2) im Wesentlichen die Form einer Klemme aufweist, mit einem Aufnahmeraum (4) und einem dem Aufnahmeraum (4) gegenüberliegenden Klemmsteg (6), wobei zwischen dem Aufnahmeraum (4) und dem Klemmsteg (6) eine im Wesentlichen U-förmige Öffnung (9) zur, insbesondere klemmenden, Aufnahme des Rahmens (24) des Solarmoduls (23) ausgebildet ist, wobei in dem Aufnahmeraum (4) eine Befestigungsmutter (11) angeordnet ist, wobei die Befestigungsmutter (11) eine Basisfläche (13) und eine Klemmfläche (14) aufweist, wobei die Klemmfläche (14) in Richtung des Klemmstegs (6) weist, wobei die Basisfläche (13) und die Klemmfläche (14) durch mindestens eine Seitenfläche (15) verbunden ist,
wobei eine Klemmschraube (21) durch eine Klemmstegöffnung (19) in ein korrespondierendes Innengewinde (16) in der Befestigungsmutter (11) einschraubbar ist, wodurch die Befestigungsmutter (11) in Richtung des Klemmstegs (6) kraftbeaufschlagbar und somit das Befestigungselement (1) am Rahmen (24) endfest festlegbar ist, **dadurch gekennzeichnet, dass** die Klemmfläche (14) wenigstens eine Erhebung (17) zur elektrischen Kontaktierung des Rahmens (24) des Solarmoduls (23) aufweist.

2. Befestigungselement (1) nach Anspruch 1, **dadurch gekennzeichnet, dass** die Klemmfläche (14) eine Mehrkantform aufweist, wobei die Erhebung (17) insbesondere in einer Ecke der Mehrkantform angeordnet ist.

3. Befestigungselement (1) nach Anspruch 2, **dadurch gekennzeichnet, dass** die Klemmfläche (14) mehrere Erhebungen (17) aufweist, wobei jede der Erhebungen (17) jeweils an einer Ecke angeordnet ist.

4. Befestigungselement (1) nach einem oder mehreren der Ansprüche 1 bis 3, **dadurch gekennzeichnet, dass** die Befestigungsmutter (11) eine Schweißmutter (12) ist.

5. Befestigungselement (1) nach einem oder mehreren der Ansprüche 1 bis 4, **dadurch gekennzeichnet, dass** der Befestigungselementkörper (2) einstückig und aus Kunststoff ist.

6. Befestigungselement (1) nach einem oder mehreren der Ansprüche 1 bis 5, **dadurch gekennzeichnet, dass** der Befestigungselementkörper (2) eine seitliche Öffnung (3) zum Einbringen der Befestigungsmutter (11) in den Aufnahmeraum (4) aufweist und dass ein oder mehrere Federmittel (5) die Befestigungsmutter (11) in Richtung des Klemmstegs (6) elastisch kraftbeaufschlagen.

7. Befestigungselement (1) nach einem oder mehreren der vorhergehenden Ansprüche, **dadurch gekennzeichnet, dass** die Befestigungsmutter (11) spielpassungsartig in dem Aufnahmeraum (4) angeordnet ist, derart, dass die Befestigungsmutter (11) bezüglich des Aufnahmeraums (4) gegen Verdrehung gesichert ist.

8. Befestigungselement (1) nach einem oder mehreren der Ansprüche 1 bis 7, **dadurch gekennzeichnet, dass** in der U-förmigen Öffnung (9) ein elastisches Federelement (10) zur Klemmung des Rahmens (24) des Solarmoduls (23) angeordnet ist.

9. Befestigungselement (1) nach einem oder mehreren der vorherigen Ansprüche, **dadurch gekennzeichnet, dass** auf einer dem Aufnahmeraum (4) abgewandten Oberseite des Klemmstegs (6) ein Kragen (7) zur formschlüssigen Verbindung mit einer Unterkonstruktion (25) ausgebildet ist.

10. Befestigungselement (1) nach Anspruch 9, **dadurch gekennzeichnet, dass** der Kragen (7) eine Zahnstruktur (8) auf einer Oberseite aufweist.

11. System aus einem Solarmodul (23) und einem oder mehreren Befestigungselementen (1) nach einem oder mehreren der vorhergehenden Ansprüche, wobei das oder die Befestigungselemente (1) an einem Rahmen (24) des Solarmoduls (23) befestigt sind und den Rahmen (24) mit einem Untergrund, insbesondere einer Unterkonstruktion (25), verbinden.
